# EUROPÄISCHE PATENTSCHRIFT

(11) **EP 1 115 676 B1**
(45) Veröffentlichungstag und Bekanntmachung des Hinweises auf die Patenterteilung: **30.07.2003**
(21) Anmeldenummer: 99944485.4
(22) Anmeldetag: 23.08.1999
(51) Int. Cl.: C04B 35/622, D01D 5/24, H01M 8/02, H01M 8/10, C25B 1/02, B01D 69/08, A61L 27/00

(54) **VERFAHREN ZUM HERSTELLEN VON HOHLFASERN**
METHOD FOR PRODUCING HOLLOW FIBRES
PROCEDE DE FABRICATION DE FIBRES CREUSES

(30) Priorität: 22.08.1998 DE 19838089
(43) Veröffentlichungstag der Anmeldung: 18.07.2001
(73) Patentinhaber: Rennebeck, Klaus, 73240 Wendlingen (DE)
(72) Erfinder: Rennebeck, Klaus, 73240 Wendlingen (DE)
(74) Vertreter: Patentanwälte Hosenthien-Held und Dr. Held
(86) Internationale Anmeldenummer: EP9906182
(87) Internationale Veröffentlichungsnummer: WO00010938

(56) Entgegenhaltungen:
- DE-A- 19 701 751
- PATENT ABSTRACTS OF JAPAN vol. 015, no. 199 (M-1115), 22. Mai 1991 (1991-05-22) -& JP 03 053902 A (FURUKAWA ELECTRIC CO LTD:THE), 7. März 1991 (1991-03-07)

## Beschreibung

Die vorliegende Erfindung betrifft ein Verfahren zum Herstellen von Hohlfasern aus Folien.

In der JP 03053902 ist ein Verfahren zur Herstellung einer oxidischen supraleitenden Spule angegeben. Gemäß diesem bekannten Verfahren wird ein polykristallines Pulver ins Innere einer aus Metallplättchen bestehenden Scheide gefüllt, die gefüllte Scheide anschließend mittels zweier Walzen in Streifenform gepreßt und zu einer mehrlagigen Spule gewickelt.

Hohlfasern, insbesondere solche von geringem Durchmesser, haben ein breites Anwendungsspektrum. Sie kommen insbesondere als Membranen, für die Herstellung von Molekularsieben, Katalysatorträgern, Filtern, Piezokeramik, Implantaten, Bauteilen für Brennstoffzellen, für Schmelzschutzschichten, Verbundwerkstoffe und dergleichen zum Einsatz. Ein bekanntes Verfahren zur Herstellung von Hohlfasern besteht darin, daß eine Dispersion, die den Vorläufer eines keramischen Materials und gegebenenfalls ein unter Hitzeeinwirkung entfernbares Bindernittel enthält, in einen Aufgabebehälter einer Spinnvorrichtung gegeben, die Dispersion strömend durch die Spinnvorrichtung gefördert und durch Düsenringöffnungen gepreßt wird, die im Bereich der Düsenöffnungen erzeugten Teilströme mittig durch Kerne geteilt werden und die Teilströme durch Erwärmen, durch Bestrahlen oder durch Zutritt eines Reaktionspartners zu grünen Mikrohohlfasern verfestigt wird. Dieses Verfahren ist beispielsweise in der EP- 0 874 788 desselben Anmelders beschrieben.

Die durch das bekannte Verfahren hergestellten Hohlfasern weisen eine im wesentlichen ebene Oberfläche auf. Bei vielen Anwendungen ist es jedoch erforderlich, über Hohlfasern mit einer strukturierten Oberfläche zu verfügen. Es ist daher die Aufgabe der vorliegenden Erfindung, ein Verfahren zur Herstellung von Hohlfasern anzugeben, mit dem sich Hohlfasern beliebiger Oberflächenstruktur erzeugen lassen.

Erfindungsgemäß wird diese Aufgabe durch ein Verfahren nach Anspruch 1 gelöst.

Das erfindungsgemäße Verfahren zum Herstellen von Hohlfasern weist folgende Schritte auf: a) Bereitstellen einer Folie, b) Wickeln der Folie zu einem Halm, wobei die Folie mindestens eine Lage aufweist, die eines der folgenden Materialien enthält: Feststoff-elektrolytmaterialien, Solgel, Keramikmaterialien, Kollagen, Harnstoff, Proteine, Gelatine, Stärke, hydrolysierbare Materialien.

Mittels dieses Verfahrens lassen sich Hohlfasern mit genau definierter Wandstärke herstellen, da Folien mit einer Schicht aus den genannten Materialien hochgenau produziert werden können.Die Präzision der Einhaltung der vorgegebenen Größe für die Wandstärke gewährleistet bei Hohlfasern, die beispielsweise für Brennstoffzellen verwendet werden, einen homogenen Rekationsverlauf über die gesamte Länge der Hohlfaser. Die Herstellung der Folien selbst ist Stand der Technik und dem Fachmann auf diesem Gebiet wohlbekannt, so daß sie hier nicht näher erläutert werden muß.

Ein weiterer Vorteil dieses Verfahrens liegt darin, daß Hohlfasern mit extrem dünnen Wänden, d.h. mit einer sehr geringen Wandstärke, hergestellt werden können: Während mit herkömmlichen Verfahren zur Herstellung von Hohlfasern lediglich Fasern einer Wandstärke von 30 bis 500 µm (siehe z. B. WO 94/23829) bzw. von etwa 0,01 bis 15 µm (siehe EP- 0 874 788 ) produzierbar sind, werden bei dem Verfahren gemäß der vorliegenden Erfindung Wandstärken von etwa 0,01 µm bis etwa 50 µm erreicht. Die geringe Wandstärke spielt bei zahlreichen Anwendungen eine wichtige Rolle. So hängt beispielsweise allgemein die Diffusionsfähigkeit der Protonen durch eine Membran und damit bei Brennstoffzellen die sogenannte "Anspringtemperatur" von der Dicke des Elektrolyten ab. Eine geringe Wandstärke ist somit insbesondere bei der Herstellung von Hohlfasern, die zu Brennstoffzellen weiterverarbeitet werden sollen, von Vorteil.

Erfindungsgemäß wird zur Herstellung der Hohlfasern eine Folie verwendet, die aus einer oder mehreren Lagen bzw. Schichten besteht, wobei mindestens eine Lage oder Schicht aus einem der folgenden Materialien besteht bzw. eines dieser Materialien enthält: Feststoffelektrolytmaterialien, Solgel, Keramikmaterialien, Kollagen, Harnstoff, Proteine, Gelatine, Stärke, hydrolysierbare Materialien. Aus diesen Stoffen lassen sich Hohlfasern erzeugen, die für eine Vielzahl von Anwendungen eingesetzt werden können: Brennstoffzellen, Vorrichtungen zur Erzeugung von Synthesegas, Vorrichtungen zur Erzeugung Methanol anderen wasserstoffhaltigen Gasen und zur Herstellung eines künstlichen Organersatzes. Die für die genannten Anwendungen benötigten Hohlfasern müssen eine protonenleitfähige Schicht aufweisen, die aus den obengenannten Materialien bestehen kann.

Wenn im Rahmen der Erfindung von "keramischen Material "gesprochen wird, dann soll dies im weitgehenden Sinne verstanden werden. Dabei soll es sich um eine Sammelbezeichnung für aus anorganischen und überwiegend nichtmetallischen Verbindungen aufgebaute Materialien handeln, die insbesondere zu mehr als 30 Vol.% kristallisierte Materialien darstellen. In diesem Zusammenhang sei verwiesen auf Römp Chemie Lexikon, 9. Auflage, Band 3, 1990, S.2193 bis 2195. Vorzugsweise handelt es sich bei dem Keramikmaterial um ein oxidisches, silicatisches, nitridisches und/oder carbidisches Keramikmaterial. Diese Materialien sind aufgrund ihrer anorganischen Natur in der Regel hydrophil, was bei vielen Anwendungen von Vorteil ist.

Unter "Solgel" wird gemäß der vorliegenden Erfindung eine Folie Schicht aus einem Keramikmaterial verstanden, die mittels des bekannten Sol-Gel-Prozesses erzeugt worden ist. Bei diesem Verfahren werden aus zunächst löslichen Verbindungen über die Zwischenstufe eines Gels keramische Massen bzw. Gläser erhalten.

Als besonders geeignet für die Herstellung von Hohlfasern für den Einsatz in Brennstoffzellen oder Vorrichtungen zur Erzeugung von Synthesegas haben sich Oxide der Titangruppe, die mit einem Seltenen Erdmetall stabilisiert sind, erwiesen. Besonders bevorzugt werden in diesem Zusammenhang Folien aus Yttrium-stabilisiertem Zirkoniumoxid. Dieses Material ist als Elektolytmaterial bekannt und hat sich insbesondere unter den für die Elektrolyse benötigten Temperaturbedingungen hervorragend bewährt.

Neben der Schicht aus den obengenannten gemeinsam Materialien können gegebenenfalls noch weitere Schichten bzw. Lagen auf dieser Schicht aufgebracht sein, so daß die Folie eine Verbundfolie bildet. Diese weiteren Schichten oder Lagen können beispielsweise eine Elektrodenschicht im Falle der für Brennstoffzellen oder eine Vorrichtung zur Erzeugung von Synthesegas vorstehenden Hohlfasern sein. Des weiteren sind auch Schichten aus Katalysatormaterialien für jeweiligen Reaktionen denkbar. Folgende Materialien kommen beispielsweise im Zusammenhang mit der Reaktion zur Erzeugung von Synthesegas in Betracht: Spinnel (MgAlO), Titandioxid ( in seiner Anatasform), Vanadiumpentoxid, Wolframtrioxid, Kupferoxid, Molybdänoxid und Eisenoxid.

Das erfindungsgemäße Verfahren kann sowohl von Hand als auch maschinell durchgeführt werden. Die im letzteren Fall zu verwendenden Maschinen entsprechen denjenigen, die beispielsweise bei der Herstellung von Zigaretten eingesetzt werden. Im Anschluß an das Wickeln der Hohlfasern bzw. des Halmes kann gegebenenfalls die Nahtstelle, das heißt die Linie, entlang der die Kanten der Folie aneinanderstoßen, verklebt oder verschweißt werden. In vielen Fällen kann eine geeignete Verbindung bereits durch das Überlappen der Kanten der Folie auf einem schmalen Streifen und durch Drücken der überlappenden Streifen gegeneinander hergestellt werden.

Im Zusammenhang mit dem erfindungsgemäßen Verfahren können Folien verwendet werden, die eine strukturierte, insbesondere plissierte oder gewölbte bzw. gewellten, Oberfläche aufweisen. Die Verwendung solcher Folien bzw. Schichten ist dann von Vorteil, wenn eine möglichst große Oberfläche gewünscht wird. Ein weiterer Vorteil der Verwendung von Folien mit strukturierter Oberfläche besteht darin, daß die damit hergestellten Hohlfasern eine erhöhte Biegefestigkeit aufweisen. Alternativ dazu ist es natürlich auch möglich, Folien bzw. einzelne Schichten mit planaren, glatten Oberflächen zu verwenden.

Gemäß einer Ausführungsform der vorliegenden Erfindung wir die Folie vor Schritt b) streifenförmig zugeschnitten und in Schritt b) spiralförmig gewickelt. Auf diese Weise lassen sich Hohlfasern in Form von Wendel- bzw. Spiralröhrchen erzeugen. Die so hergestellten Röhrchen oder Fasern zeichnen sich gegenüber denjenigen, welche gerade gewickelt sind, dadurch durch eine erhöhte Biegefestigkeit aus.

Für die meisten Anwendungen werden Fasern bzw. Röhrchen einer Länge von etwa 0,03 m bis etwa 3,0 m, insbesondere eine Länge von etwa 0,1 m bis etwa 0,5 m, benötigt. Demzufolge ist es günstig, wenn bereits die Folien vor dem Wickeln auf die entsprechende Länge zugeschnitten werden. Es sei in diesem Zusammenhang darauf hingewiesen, daß bei wendelförmiger Wicklung natürlich entsprechend kürzere, dafür jedoch breitere Folienstreifen zu verwenden sind. Prinzipiell ist es mit dem Verfahren gemäß der vorliegenden Erfindung möglich, jedes gewünschte und technisch sinnvolle Längen- bzw. auch Durchmesserverhältnis zu verwirklichen.

Falls die Folie keramische Ausgangsmaterialien bzw. die Vorläufer eines keramischen Materials beinhaltet, können im Anschluß an das Wickeln der Hohlfasern bzw. Halme diese je nach Bedarf porös oder dicht gebrannt werden. Für manche Anwendungen ist es notwendig, daß die Hohlfaser bestimmte Eigenschaften in bezug auf die Durchlässigkeit für bestimmte Gase aufweist. So ist es beispielsweise möglich, die durch das erfindungsgemäße Verfahren hergestellten Fasern als Gastrennmembranen aber auch zur Trennung von Flüssigkeiten oder Gemischen einzusetzen, da die Fasern sehr gute Trenneigenschaften im Mikro- und Nanobereich aufweisen. In das Lumen derartiger Trennmembranen in Form einer Hohlfaser bzw. eines Halmes oder eines Röhrchens wird ein zu trennendes Gasgemisch eingeleitet, wobei ein Teil des Gemisches durch die Faserwand hindurchdiffundiert. Der andere Teil, der die Faserwand nicht durchdringen kann, tritt auf der anderen Seite der Faser wieder aus deren Lumen aus.

Durch geeignete Auswahl von Material und Brenntemperatur bzw. -dauer kann eine gewünschte Porengröße erzielt werden. Bei vergleichsweise starkem Brennen können die Hohlfasern dicht und impermeabel gestaltet werden. Derartige dichtgebrannte Hohlfasern können insbesondere hochvakuumdicht, gut lichtleitend und besonders schwimm- und flugfähig sein.

Bei einigen Anwendungen, so z.B. bei Verwendung der hergestellten Hohlfasern für eine Brennstoffzelle oder eine Vorrichtung zur Erzeugung von Synthesegas, muß die Elektrolytschicht auf jeder Seite mit eine Elektrode aufweisen. In diesem Fall gibt es mehrere Möglichkeiten, die Hohlfaser-Elektrolyten mit den Elektoden zu versehen: Zum einen können die Elektroden zusammen mit der Elektrolytschicht extrudiert werden. Eine weitere Möglichkeit besteht darin, zunächst eine Folie aus dem Feststoffelektrolytmaterial zu extrudieren und diese Folie anschließend auf bekannte Weise mit denen Elektoden zu beschichten. Die Elektoden liegen dabei vorzugsweise ebenfalls in Folienform vor. Schließlich ist es auch möglich, zuerst einen Halm bzw. eine Hohlfaser aus einer Elektrolytfolie zu wickeln und auf diesen Halm anschließend das Elektodenmaterial, beispielsweise durch Bedampfen, aufzubringen. Alle diese Möglichkeiten sind im Stand der Technik bekannt und brauchen deshalb hier näher erläutert zu werden.

Wenn eine Hohlfaser bzw. ein Halm hergestellt werden soll, der eine Schicht aus einem keramischen Material aufweist, so kann diese Schicht entweder aus Schlickern gegossen bzw. gezogen oder aus einem Granulat extrudiert sein. Der Schlicker besteht aus dem pulverförmigen Keramikmaterial und, falls auch die Elektrodenschicht zusammen mit der Elektrolytschicht hergestellt werden soll, aus der pulverförmigen Legierung für die Elektoden. Gegebenenfalls können auch die Katalysatormaterialien in Pulverform Bestandteil des Schlickers sein, wenn die herzustellende Hohlfaser eine Katalysatorschicht aufweisen soll.

Die Erfindung betrifft auch eine Hohlfaser oder einen Halm, der durch das erfindungsgemäße Verfahren hergestellt ist und mindestens eine Schicht aufweist, die eines der folgenden Materialien enthält: Feststoffelektrolytmaterialien, Solgel, Keramikmaterialien, Kollagen, Harnstoff, Proteine, Gelatine, Stärke, hydrolysierbare Materialien, wobei die Faser eine Verbindungsnaht aufweist, die parallel zu ihrer Längsachse oder wendelförmig um diese herum verläuft.

Unter "Verbindungsnaht" wird im Sinne der vorliegenden Erfindung sowohl diejenige Linie verstanden, an der die Kanten der Folienstreifen aneinanderstoßen als auch eine streifenförmige Überlappung der Kanten der Folie. Die Folien selbst können sehr dünn hergestellt werden, so daß die erzeugten Hohlfasern oder Halme äußerst feine Wände aufweisen. Durch die Faser- oder Halmform wird jedoch die Stabilität der Folien sichergestellt. Dies ist insbesondere bei Anwendungen von Vorteil, bei der das Folienmaterial gewässert werden muß, wie dies beispielsweise bei der Verwendung in einer Brennstoffzelle der Fall ist. Werden die Brennstoffzellen aus ebenen dünnen Elektrolytfolien hergestellt, die in einen Rahmen eingespannt sind, so besteht das Problem, daß sich die Folien, wenn sie gewässert werden, was für viele Anwendungen notwendig ist, wellen und durchhängen, was ihre Funktionsfähigkeit beeinträchtigt.

Wie dies bereits im Zusammenhang mit dem erfindungsgemäßen Verfahren erwähnt wurde, kann die Hohlfaser, je nach Bedarf, aus einer planebenen oder eine strukturierten Folie hergestellt sein. Im letzteren Fall wird eine axiale Plissierung vorgezogen, da dies unter Stabilitätsgesichtspunkten besonders günstig ist.

Die erfindungsgemäßeHohlfaser kann prinzipiell in jeder beliebigen Länge, die in situ vorkommt und technisch und wirtschaftlich sinnvoll ist, hergestellt werden. Für die meisten Anwendungen hat sich jedoch eine Länge von etwa 0,03 m bis etwa 3 m, insbesondere etwa 0,1 m bis etwa 0,5 m, als nützlich erwiesen.

Auch der Außendurchmesser der erfindungsgemäßen Hohlfaser kann entsprechend dem jeweiligen Bedarf ausgewählt werden. Insbesondere für die genannten Anwendungen ist im allgemeinen ein Außendurchmesser der gewickelten Faser von etwa 0,28 mm bis etwa 10,0 mm, insbesondere von etwa 1,0 mm bis etwa 5,0 mm, ausreichend. Fasern mit diesem Durchmesser können problemlos von Hand hergestellt bzw. gewickelt werden.

Auf den Oberflächen der erfindungsgemäßen Hohlfasern können folienförmige Elektrolyten aufgebracht sein, wenn die Hohlfasern in Zusammenhang mit einem Elektrolyseverfahren verwendet werden. Wie dies bereits erwähnt wurde, ist es auch möglich, daß auf den Oberflächen eine weitere Schicht, welche aus einem Keramikmaterial hergestellt ist, aufgebracht ist. Des weiteren kann auch eine Schicht aus Kohlenstoff vorliegen, die der Konditonierung der Elektrolytschicht dient. Die zusätzlichen Schichten können vor oder nach dem Schritt des Wickelns der Faser aufgebracht werden. Es ist natürlich möglich, bei Bedarf auch weitere Schichten, die verschiedene Funktionen erfüllen, auf die erste oder eine weitere Schicht zu setzen.

Wie dies bereits erwähnt wurde, können die Hohlfasern der vorliegenden Erfindung unter anderem zu folgendem verwendet: Herstellung von Brennstoffzellen, von Gasreaktoren, insbesondere zur Erzeugung von Synthesegas, zum Anzüchten menschlicher oder tierischer Zellen als Organersatz, als Membranen oder Membranträger.

Brennstoffzellen, die anstelle von plattenförmigen Feststoffelektrolyten faser- bzw. halmförmige Elektrolyten aufweisen, zeichnen sich durch einen verhältnismäßig geringen Platzbedarf aus. Je nach gewähltem Folienmaterial können PEM- Brennstoffzellen, SOFC-Brennstoffzellen oder sonstige Brennstoffzellen hergestellt werden. Je nach Bedarf kann die Anode bzw. die Kathode auf der inneren oder äußeren Oberfläche der erfindungsgemäßen Hohlfaser angebracht sein.

Die Erfindung betrifft des weiteren eine Matrix, die mindestens eine Hohlfaser, welche insbesondere nach dem Verfahren gemäß einem der Ansprüche 1 bis 9 hergestellt ist, sowie mindestens eine weitere Faser aufweist, wobei die mindestens eine Hohlfaser in einem textilen Vlies, Gestrick, Filz, Spannbond oder Gewebe aus der mindestens einen weiteren Faser eingebettet ist. Dieses Vlies, Gestrick oder Gewebe dient der Stabilisierung der mindestens einen Hohlfaser. In der Praxis werden zumeist mehrere Hohlfasern in ein derartiges Vlies, Gestrick oder Gewebe integriert. Die weiteren Fasern können ebenfalls als Hohlfasern, aber auch als Vollfasern ausgebildet sein, wobei sie vorzugsweise textile Eigenschaften aufweisen, d.h., daß sie biegbar sind und zu den vorstehend genannten textilen Geweben und dergleichen verarbeitet werden können.

Die mindestens eine Hohlfaser, die gemäß dem erfindungsgemäßen Verfahren hergestellt sein kann, kann als Reaktionsraum, insbesondere für Gasreaktionen dienen. Beispielsweise kann die mindestens eine Hohlfaser als Feststoffelektrolyt ausgebildet sein und für die Brennstoffzellenreaktion oder die Reaktion zur Erzeugung von Synthesegas eingesetzt werden.

Neben der Stabilisierungsfunktion können die weiteren Fasern, aus denen das Gewebe oder dergleichen hergestellt ist, auch weitere Funktionen erfüllen. So können die weiteren Fasern beispielsweise auch aus einem Elektodenmaterial, d.h. aus einem elektrisch leitenden Material, hergestellt sein und als Anode oder Kathode fungieren. In diesem Fall ersetzen die weiteren Fasern die vorstehend genannte Elektrodenschicht, welche die erfindungsgemäße Hohlfaser beinhalten kann. Die weiteren Fasern können zu diesem Zweck Kohlenstoffasern sein, wobei sie zusätzlich die Funktion der Konditonierung der Elektrolythohlfasern erfüllen, da Kohlenstoff die Eigenschaft hat, viel Wasser aufzunehmen. Darüber hinaus ist es möglich, die weiteren Fasern, wenn sie als Elektoden dienen sollen, aus einem elektrisch leitenden Polymer herzustellen.

Alternativ oder zusätzlich zu der vorstehend genannten Möglichkeit, die weiteren Fasern aus einem Elektodenmaterial herzustellen, können die weiteren Fasern auch zumindest teilweise aus einem Material hergestellt sein, das für die in der Hohlfaser stattfindende Reaktion als Katalysator wirkt. In diesem Fall ersetzen die weiteren Fasern eine Katalysatorschicht auf der Hohlfaser.

In beiden vorstehend genannten Fällen ist darauf zu achten, daß ausreichende Kontaktflächen zwischen der mindestens einen Hohlfaser, die den Feststoffelektrolyten bildet, und den weiteren Fasern, die als Elektoden und/oder Katalysatoren wirken, besteht. Selbstverständlich können die weiteren Fasern so ausgebildet sein, daß sie verschiedene andere Funktionen erfüllen können. Beispielsweise ist es denkbar, eine dichtgebrannte Hohlfaser des Gewebes oder dergleichen als Wärmetauscher zwischen dem eingeleiteten Reaktionsmedium und dem Reationsprodukt bzw. gegebenenfalls weiteren Stoffströmen zu verwenden.

Eine solche Matrix, die als Brennstoffzelle ausgelegt ist, welche insbesondere dafür gedacht ist, in einem elektrisch angetriebenen Fahrzeug eingesetzt zu werden, kann so dimensioniert sein, daß sie sich im wesentlichen über die gesamte Länge der Chassis des entsprechenden Fahrzeugs erstreckt. Die so konstruierte Brennstoffzelle kann im Unterbodenraum des Fahrzeugs eingesetzt werden. Vorzugsweise wird eine solche Brennstoffzelle in einen Rahmen gefaßt, der die offenen Faserenden umgibt und über den die durch die Brennstoffzelle erzeugte Spannung abgeleitet werden kann. Die Spannung wird dann, wenn die Brennstoffzelle dem Antrieb eines Kraftfahrzeugs dient, einem Elektromotor, der als Außenläufermotor ausgebildet sein kann, zugeführt, wobei vorzugsweise eine Einheit zur Speicherung elektrischer Energie zwischengeschaltet ist. Für genauere Angaben im Zusammenhang mit dem Einsatz von Hohlfasern in Brennstoffzellen und deren detaillierte Konstruktion sei auf die internationale Anmeldung WO 99/34464 desselben Anmelders verwiesen.

Die erfindungsgemäße Matrix aus mindestens einer Hohlfaser sowie mindestens einer weiteren Faser kann auch als künstlicher Organersatz verwendet werden. Auf den Fasern werden in diesem Fall Zellkulturen, beispielsweise Leberzellen, angezüchtet. In diesem Fall sind die für die Matrix verwendeten Hohlfasern aus hydrolysierbaren Stoffen hergestellt, insbesondere aus Kollagen, Proteinen, Gelatine, Harnstoff oder Stärke oder aus einer Kombination bzw. Mischung der vorgenannten Materialien. Im Zusammenhang mit der genauen Konstruktion eines solchen künstlichen Organersatzes sei auf die internationale Patentanmeldung "Harnstofferzeugender Organersatz" desselben Anmelders verwiesen.

Die nach dem erfindungsgemäßen Verfahren hergestellten Hohlfasern können neben den genannten Anwendungen für zahlreiche weitere Zwecke überall dort eingesetzt werden, wo Fasern mit geringer Wandstärke und/oder Fasern, deren Wandstärke eine geringe Schwankungsbreite aufweist, also Fasern mit äußerst präzisen Abmessungen benötigt werden.

## Patentansprüche

1. Verfahren zur Herstellung von Hohlfasern mit Wandstärken von 0,01 µm bis 50 µm, aufweisend die folgenden Schritte:
a) Bereitstellen einer Folie,
b) Wickeln der Folie zu einem Halm,
wobei die Folie mindestens eine Lage aufweist, die protonenleitfähig ist, nämlich Feststoffelektrolytmaterialien, Solgel, Keramikmaterialien, Kollagen, Harnstoff, Proteine, Gelatine, Stärke, hydrolysierbare Materialien enthält.

2. Verfahren nach Anspruch 1, **dadurch gekennzeichnet, daß** eine Folie mit strukturierter, insbesondere plissierter oder gewölbter, Oberfläche verwendet wird.

3. Verfahren nach Anspruch 1 oder 2, **dadurch gekennzeichnet, daß** die Folie vor Schritt b) streifenförmig zugeschnitten und in Schritt b) wendelförmig gewickelt wird.

4. Verfahren nach einem der vorstehenden Ansprüche, **dadurch gekennzeichnet, daß** die Folie vor Schritt b) auf eine Länge von etwa 0,03 m bis etwa 3,0 m, insbesondere auf eine Länge von etwa 0,1 m bis etwa 0,5 m abgeschnitten wird.

5. Verfahren nach einem der vorstehenden Ansprüche, **dadurch gekennzeichnet, daß** Folien mit einer Schicht aus keramischen Materialien verwendet werden, die im Anschluß an Schritt b) porös oder dicht gebrannt wird.

6. Verfahren nach einem der vorstehenden Ansprüche, **dadurch gekennzeichnet, daß** eine Folie verwendet wird, die auf ihren Oberflächen mit Elektoden versehen ist.

7. Verfahren nach einem der vorstehenden Ansprüchel bis 6, **dadurch gekennzeichnet, daß** eine Folie verwendet wird, welche mindestens eine Schicht aufweist, die aus keramischen Schlickern gegossen ist.

8. Verfahren nach einem der vorstehenden Ansprüche 1 bis 6, **dadurch gekennzeichnet, daß** eine Folie verwendet wird, welche mindestens eine Schicht aufweist, die aus einem Granulat extrudiert ist.

9. Hohlfaser, hergestellt nach dem Verfahren nach mindestens einem der Ansprüche 1 bis 8, **dadurch gekennzeichnet, dass** sie mindestens eine Schicht aufweist, die protonenleitfähig ist, nämlich Feststoffelektrolytmaterialien, Solgel, Keramikmaterialien, Kollagen, Harnstoff, Proteine, Gelatine, Stärke, hydrolysierbare Materialien enthält, und dass sie eine Verbindungsnaht aufweist, die parallel zu ihrer Längsachse oder wendelförmig um diese herum verläuft.

10. Hohlfaser nach Anspruch 9, **dadurch gekennzeichnet, daß** sie aus einer planebenen oder strukturierten Folie hergestellt ist.

11. Hohlfaser nach Anspruch 9 oder 10, **dadurch gekennzeichnet, daß** ihre Länge etwa 0,03 m bis etwa 3 m, insbesondere etwa 0,1 m bis etwa 0,5 m, beträgt.

12. Hohlfaser nach einem der Ansprüche 9 bis 11, **dadurch gekennzeichnet, daß** sie einen Außendurchmesser von etwa 0,28 mm bis etwa 10,0 mm, insbesondere von etwa 1,0 mm bis etwa 5,0 mm, aufweisen.

13. Hohlfaser nach einem der Ansprüche 9 bis 13, **dadurch gekennzeichnet, daß** auf ihren Oberflächen folienförmige Elektoden angebracht sind.

14. Verwendung der Hohlfaser nach einem der Ansprüche 9 bis 11 zur Herstellung von Brennstoffzellen, Gasreaktoren, insbesondere zur Erzeugung von Synthesegas, zum Anzüchten menschlicher oder tierischer Zellen als Organersatz, als Membranen oder Membranträger.

15. Matrix, aufweisend mindestens eine Hohlfaser, welche insbesondere nach dem Verfahren gemäß einem der Ansprüche 1 bis 9 hergestellt ist, sowie mindestens eine weitere Faser, wobei die mindestens eine Hohlfaser in einem textilen Vlies, Gestrick, Filz oder Gewebe aus der mindestens einen weiteren Fasern eingebettet ist.

16. Matrix nach Anspruch 15, **dadurch gekennzeichnet, daß** die mindestens eine Hohlfaser eine Schicht aus einem Elektrolytmaterial aufweist und daß die weiteren Fasern zumindest teilweise aus einem Elektrodenmaterial hergestellt sind.

17. Matrix nach Anspruch 15 oder 16, **dadurch gekennzeichnet, daß** die mindestens eine Hohlfaser eine Schicht aus einem Elektrolytmaterial aufweist und daß die weiteren Fasern zumindest teilweise aus einem Katalysatormaterial hergestellt sind.

## Claims

1. Procedure for producing hollow fibres having a wall thickness of 0.01 µm to 50 µm, comprising the following steps:
a) providing a foil,
b) wrapping the foil into a stalk,
the foil having a minimum of one proton conducting layer, i.e. containing non-volatile electrolyte materials, solgel, ceramic materials, collagen, urea, proteins, gelatine, starch and hydrolysable materials.

2. Procedure according to Claim 1, **characterized by** the fact that a foil is used having a structured surface, particularly a pleated or domed surface.

3. Procedure according to Claim 1 or 2, **characterized by** the fact that the foil prior to step b) is cut in strips which, in step b), are coiled in the shape of a helix.

4. Procedure according to one of the preceding claims, **characterized by** the fact that the foil prior to step b) is cut to a length of approximately 0.03 m to approximately 3.0 m, particularly to a length of approximately 0.1 m to approximately 0.5 m.

5. Procedure according to one of the preceding claims, **characterized by** the fact that the foils are used with a layer of ceramic materials which, after step b), is burned to obtain porous or dense material.

6. Procedure according to one of the preceding claims, **characterized by** the fact that a foil is used having electrodes on its surfaces.

7. Procedure according to one of the preceding claims 1 to 6, **characterized by** the fact that a foil is used having a minimum of one layer of ceramic dip coat/slip casting.

8. Procedure according to one of the preceding claims 1 to 6, **characterized by** the fact that a foil is used having a minimum of one layer extruded from granulate.

9. Hollow fibre, produced according to the procedure in at least one of the claims 1 to 8, **characterized by** the fact that it has a minimum of one proton conducting layer, i.e. containing non-volatile electrolyte materials, solgel, ceramic materials, collagen, urea, proteins, gelatine, starch and hydrolysable materials, and having a connecting seam running parallel to its longitudinal axis or around it like a helix.

10. Hollow fibre according to Claim 9, **characterized by** the fact that it is produced from a plane or structured foil,

11. Hollow fibre according to Claim 9 or 10, **characterized by** the fact that its length is approximately 0.03 m to approximately 3 m, particularly approximately 0.1 m to approximately 0.5 m.

12. Hollow fibre according to one of Claims 9 to 11, **characterized by** the fact that it has an external diameter of approximately 0.28 mm to approximately 10.0 mm, particularly approximately 1.0 mm to approximately 5.0 mm.

13. Hollow fibre according to one of Claims 9 to 13, **characterized by** the fact that foil-shaped electrodes are attached to its surfaces.

14. Use of the hollow fibre according to one of Claims 9 to 11 for the production of fuel cells, gas reactors, particularly for the production of synthetic gas, for initial cultivation of human or animal cells used in organ replacement, as membranes or membrane carriers.

15. Matrix having a minimum of one hollow fibre produced particularly according to one of Claims 1 to 9, and a minimum of one other fibre, this minimum of one hollow fibre being embedded in a textile fleece, knitted fabric, felt or fabric made with a minimum of one other fibre.

16. Matrix according to Claim 15, **characterized by** the fact that this minimum of one hollow fibre has one layer of electrolyte material and that the other fibres are made, at least in part, of electrode material.

17. Matrix according to Claim 15 or 16, **characterized by** the fact that this minimum of one hollow fibre has a layer of electrolyte material and that the other fibres are made, at least in part, of catalyst material.

## Revendications

1. Procédé de production pour fibres creuses ayant une épaisseur de paroi de 0.01 µm à 50 µm, comprenant les étapes suivantes:
a) mise à disposition d'une feuille,
b) enroulage de la feuille pour former une tige,
la feuille ayant un minimum d'une couche conductrice de protons, c'est à dire contenant des électrolytes (extrait sec), solgel, matériaux céramiques, collagène, urée, protéines, gélatine, amidon et matériaux hydrolysables.

2. Procédé selon la revendication 1, **caractérisé par le fait qu'**une feuille est utilisée ayant une surface structurée, particulièrement une surface plissée ou bombée.

3. Procédé selon la revendication 1 ou 2, **caractérisé par le fait que** la feuille, avant l'étape b), est coupée en lamelles qui, dans l'étape b), sont enroulées pour former une hélice.

4. Procédé selon une des revendications précédentes, **caractérisé par le fait que** la feuille, avant l'étape b), est coupée à une longueur d'environ 0.03 m à environ 3.0 m, particulièrement à une longueur d'environ 0.1 m à environ 0.5 m.

5. Procédé selon une des revendications précédentes, **caractérisé par le fait que** des feuilles sont utilisées ayant une couche de matériaux céramiques qui, suivant l'étape b) sont brûlés pour obtenir un matériau céramique poreux ou dense.

6. Procédé selon une des revendications précédentes, **caractérisé par le fait qu'**une feuille est utilisée portant des électrodes sur sa surface.

7. Procédé selon une des revendications précédentes 1 à 6, **caractérisé par le fait qu'**une feuille est utilisée ayant un minimum d'une couche d'enduits au trempé céramiques.

8. Procédé selon une des revendications précédentes 1 à 6, **caractérisé par le fait qu'**une feuille est utilisée ayant un minimum d'une couche extrudée de granulés.

9. Fibre creuse, produite selon le procédé décrit dans au moins une des revendications 1 à 8, **caractérisée par le fait qu'**elle possède un minimum d'une couche conductrice de protons, c'est à dire qu'elle contient des électrolytes (extrait sec), solgel, matériaux céramiques, collagène, urée, protéines, gelatine, amidon et matériaux hydrolysables, et qu'elle a une couture de raccord parallèle à son axe longitudinal ou enroulée autour de celui-ci en forme d'hélice.

10. Fibre creuse selon la revendication 9, **caractérisée par le fait qu'**elle est faite d'une feuille plane ou structurée.

11. Fibre creuse selon la revendication 9 ou 10, **caractérisée par le fait qu'**elle a une longueur d'environ 0.03 m à environ 3 m, particulièrement d'environ 0.1 m à environ 0.5 m.

12. Fibre creuse selon une des revendications 9 à 11, **caractérisée par le fait qu'**elle a un diamètre extérieur d'environ 0.28 mm à environ 10.0 mm, particulièrement d'environ 1.0 mm à environ 5.0 mm.

13. Fibre creuse selon une des revendications 9 à 13, **caractérisée par le fait que** des électrodes en forme de feuilles sont attachées sur ses surfaces.

14. Utilisation de la fibre creuse selon une des revendications 9 à 11 pour la production de cellules de combustible, réacteurs à gaz, particulièrement pour la production de gaz synthétique, pour la cultivation initiale de cellules humaines ou animales utilisées pour le remplacement d'organes, comme membranes ou support de membranes.

15. Matrice ayant un minimum d'une fibre creuse, produite particulièrement selon une des revendications 1 à 9 et un minimum d'une autre fibre, ce minimum d'une fibre creuse étant enfoncée dans une toison textile, un tissu tricoté, dans du feutre ou du tissu fait avec un minimum d'une autre fibre.

16. Matrice selon la revendication 15, **caractérisée par le fait que** le minimum d'une fibre creuse possède une couche d'électrolyte et que les autres fibres sont faites, au moins partiellement, d'un matériau d'électrode.

17. Matrice selon la revendication 15 ou 16, **caractérisée par le fait que** le minimum d'une fibre creuse possède une couche d'électrolyte et que les autres fibres sont faites, au moins partiellement, d'un matériau catalytique.
